# EUROPÄISCHE PATENTANMELDUNG

(11) **EP 1 372 234 A1**
(43) Veröffentlichungstag der Anmeldung: **17.12.2003**
(21) Anmeldenummer: 03001848.5
(22) Anmeldetag: 29.01.2003
(51) Int. Cl.: H02G 3/18

(54) **Unterfluranschlussdose**

(30) Priorität: 13.06.2002 DE 20209189 U
(71) Anmelder: OBO Bettermann GmbH & Co. KG., 58710 Menden (DE)
(72) Erfinder: Gnädig, Andras, 1117 Budapest (HU)
(74) Vertreter: Patentanwälte Dipl.-Ing. Conrad Köchling Dipl.-Ing. Conrad-Joachim Köchling

(57) **Zusammenfassung**

Um eine Unterfluranschlussdose für elektrotechnische Zwecke mit einem Deckel (1) und einem im Deckel (1) vorgesehenen Schnurauslass mit Schließklappe (2), wobei die Schließklappe (2) bündig in den Deckel (1) eingepasst und um eine deckelseitige Schwenkachse (3), in eine Öffnungslage schwenkbar ist zu schaffen, die in geschlossenem Zustand die entsprechende Einbauöffnung vollständig und flächenbündig mit dem Fußboden abdeckt, wobei dennoch eine einfache Bedienbarkeit zum Öffnen der Schließklappe erhalten sein soll, wird vorgeschlagen, die Schließklappe (2) einen unterhalb der Oberseite des Deckels (1) liegenden Hebel (4) aufweist und ein den Deckel (1) durchgreifender Druckknopf (5) am Deckel · (1) verschieblich gehaltert ist, der mit seinem Handhabungsendteil (6) von der Oberseite des Deckels (1) betätigbar ist und mit seinem anderen Ende oberhalb des Hebels (4) liegt, so dass durch Drücken auf das Handhabungsendteil (6) der Hebel (4) und damit die Schließklappe (2) in Öffnungslage schwenkbar ist.

## Beschreibung

Die Erfindung betrifft eine Unterfluranschlussdose für elektrotechnische Zwecke mit einem Deckel und einem im Deckel vorgesehenen Schnurauslass mit Schließklappe, wobei die Schließklappe bündig in den Deckel eingepasst und um eine deckelseitige Schwenkachse, in eine Öffnungslage schwenkbar ist.

Solche Unterfluranschlussdosen sind bündig in den Fußboden von Büroräumen oder dergleichen angeordnet und beispielsweise mit Unterfluranschlusskanälen untereinander verbunden. In die Unterfluranschlussdosen können elektrotechnische Bauteile eingebaut werden, wobei im geschlossenen Zustand die Dose mit ihrem Deckel bündig in der Ebene des Fußbodens liegt. Um beispielsweise Kabel oder dergleichen von oberhalb des Fußbodens aufgestellten Geräten in die Unterfluranschlussdose verlegen zu können und mit entsprechenden Steckern mit Elektrogeräten zu koppeln die in der Unterfluranschlussdose angeordnet sind, ist es erforderlich, die Schließklappe zu öffnen, so dass hierdurch ein Schnurauslass gebildet ist. Um die Schließklappe handhaben zu können, sind Handhabungshilfen, Griffteile oder dergleichen erforderlich, die dazu führen, dass die Oberfläche der Unterfluranschlussdose nicht mehr eine ebene Fläche ist, sondern dass dort Griffausnehmungen oder dergleichen vorgesehen sind. Dies ist deswegen nicht erwünscht, weil sich in diesen Ausnehmungen oder dergleichen Schmutz absetzen kann, der beim Reinigen des Bodens nicht in einfacher Weise entfernt werden kann. Darüber hinaus sind solche Ausnehmungen auch optisch wahrnehmbar, was den optischen Gesamteindruck stört. Zudem können durch entsprechende Ausnehmungen oder dergleichen Stolperfallen gebildet sein.

Ausgehend von diesem Stand der Technik liegt der Erfindung die Aufgabe zugrunde, eine Unterfluranschlussdose gattungsgemäßer Art zu schaffen, die in geschlossenem Zustand die entsprechende Einbauöffnung vollständig und flächenbündig mit dem Fußboden abdeckt, wobei dennoch eine einfache Bedienbarkeit zum Öffnen der Schließklappe erhalten sein soll.

Zur Lösung dieser Aufgabe schlägt die Erfindung vor, dass die Schließklappe einen unterhalb der Oberseite des Deckels liegenden Hebel aufweist und ein den Deckel durchgreifender Druckknopf am Deckel verschieblich gehaltert ist, der mit seinem Handhabungsendteil von der Oberseite des Deckels betätigbar ist und mit seinem anderen Ende oberhalb des Hebels liegt, so dass durch Drücken auf das Handhabungsendteil der Hebel und damit die Schließklappe in Öffnungslage schwenkbar ist.

Dadurch, dass die Schließklappe einerseits bündig in den Deckel eingepasst ist, so dass sie praktisch spaltfrei mit der Deckelfläche eine Ebene bildet ist es eigentlich nicht möglich, diese Schließklappe manuell zu bedienen. Um eine manuelle Bedienung zu ermöglichen, ist an der Schließklappe unterseitig der Oberseite des Deckels eine Verlängerung in Form eines Hebels vorgesehen, vorzugsweise angeformt. In den Bereich, unter welchem der Hebel in Schließlage der Schließklappe angeordnet ist, ist am Deckel ein diesen durchgreifender Druckknopf vorgesehen, der ebenfalls flächenbündig in die Oberseite des Deckels eingepasst ist, aber verschieblich am Deckel gehaltert ist. Der Benutzer kann auf das Handhabungsendteil mit einem Finger drücken, wobei dieses Handhabungsteil in der Oberseite des Deckels frei zugänglich liegt. Hierdurch wird der Druckknopf zum Inneren der Unterfluranschlussdose hin verschoben und wirkt mit seinem Ende auf den Hebel ein, so dass durch Drücken auf das Handhabungsendteil der Hebel und damit auch die Schließklappe in die Öffnungslage verschwenkbar ist. Es reicht dabei aus, wenn die Schließklappe lediglich aus der Deckelebene angehoben wird, so dass der Benutzer dann die Schließklappe an der Randseite ergreifen und in die vollständige Öffnungslage überführen kann, um beispielsweise Kabel oder dergleichen aus der Unterfluranschlussdose herauszuführen oder in dies einzuführen.

Bevorzugt ist dabei vorgesehen, dass der Druckknopf als Handhabungsendteil einen flachen Kopf aufweist, der bei nicht gedrücktem Druckknopf bündig in der von der Deckeloberseite aufgespannten Ebene liegt, und als anderen Enteil einen schaftartigen Stößel aufweist, mittels dessen der Hebel betätigbar ist.

Der flache Kopf ist so groß bemessen, dass seine Abmessung etwa der Größe der Fingerkuppe eines Erwachsenen entspricht. Zudem kann der flache Kopf oberseitig eine Markierung oder einen Hinweis aufweisen, der dem Benutzer signalisiert, dass er zum Öffnen auf diese Stelle drücken muss.

Bevorzugt ist zudem vorgesehen, dass der Druckknopf in einer Führung des Deckels geführt und durch einen Anschlagkragen des Deckels begrenzt in Richtung zum Boden oder Unterfluranschlussdose verschieblich ist.

Durch diese Anordnung ist einerseits eine sichere Führung des Druckknopfes bei seiner Betätigung gebildet, wobei insbesondere der flache Kopf des Druckknopfes beim Eindrücken gegen einen Anschlagkragen des Deckels angedrückt wird, wodurch eine Eindrücktiefenbegrenzung gebildet ist.

Zudem ist bevorzugt vorgesehen, dass der Druckknopf gegen die Kraft einer Rückstellfeder eindrückbar ist.

Hierdurch wird der Druckknopf nach der Betätigung und nach der Freigabe durch den Finger des Benutzers wieder durch die Kraft der Rückstellfeder in die Ursprungslage zurückgeführt.

Eine besonders bevorzugte Weiterbildung wird darin gesehen, dass die Rückstellfeder durch Federarme gebildet ist, die am Deckel im Bereich der Einsatzöffnung für den Druckknopf angeformt sind.

Der Deckel der Unterfluranschlussdose ist ein Formteil aus Kunststoff, wobei die Federarme aus dem gleichen Material im Bereich der Einsatzöffnung für den Druckknopf angeordnet sein können. Auch der Druckknopf selbst kann aus Kunststoff bestehen, ebenso wie die am Deckel angelenkte in einen Randausschnitt eingepasste Schleißklappe.

Besonders bevorzugt ist dabei weiterhin vorgesehen, dass die Federarme nach Art einer Schraubendruckfeder den Schaft des Druckknopfes umgeben und an der Unterseite des flachen Kopfes mit ihrem freien Endbereich anliegen.

Hierdurch ist eine sehr Platz sparende, kostengünstige und funktionelle Ausbildung geschaffen.

Unter Umständen ist auch bevorzugt vorgesehen, dass der Hebel in Schließlage der Schließklappe an Anschlagflächen anliegt, die an der Unterseite des Deckels ausgebildet sind.

Zusätzlich oder alternativ kann auch vorgesehen sein, dass die Schließklappe am Deckel in Schließlage und/oder Öffnungslage rastend gehalten ist.

Ein Ausführungsbeispiel ist in der Zeichnung dargestellt und im Folgenden näher beschrieben.

Es zeigt:
- Figur 1: einen Deckel einer Unterfluranschlussdose in Draufsicht gesehen;

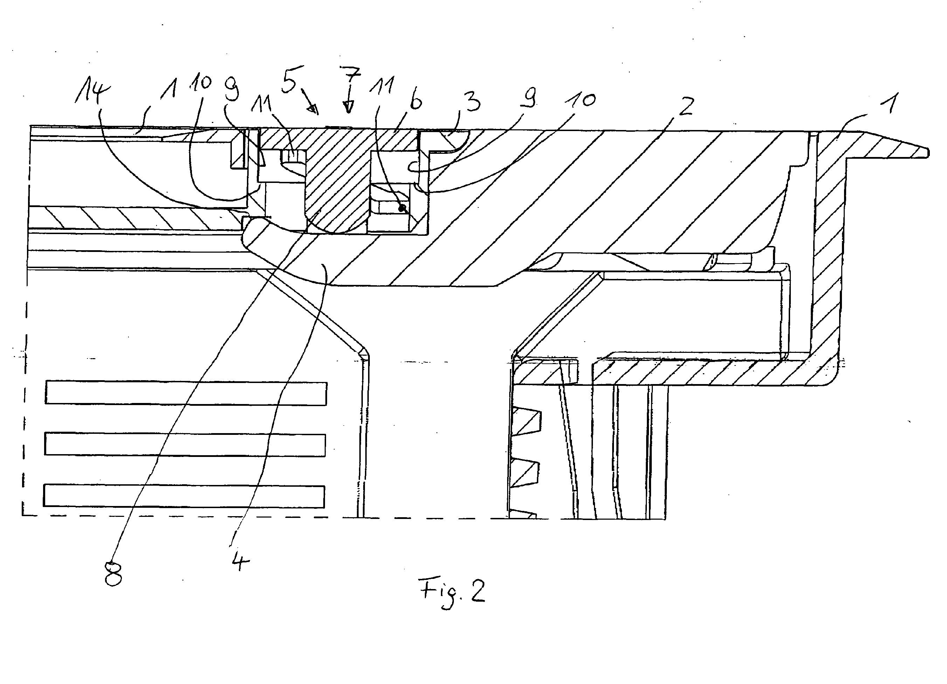

- Figur 2: einen Schnitt durch den Deckel gemäß Figur 1 in Blickrichtung der Pfeile II/II der Figur 1 gesehen bei geschlossener Schleißklappe;
- Figur 3: desgleichen bei betätigtem Druckknopf und in Öffnungslage verschwenkter Schließklappe;

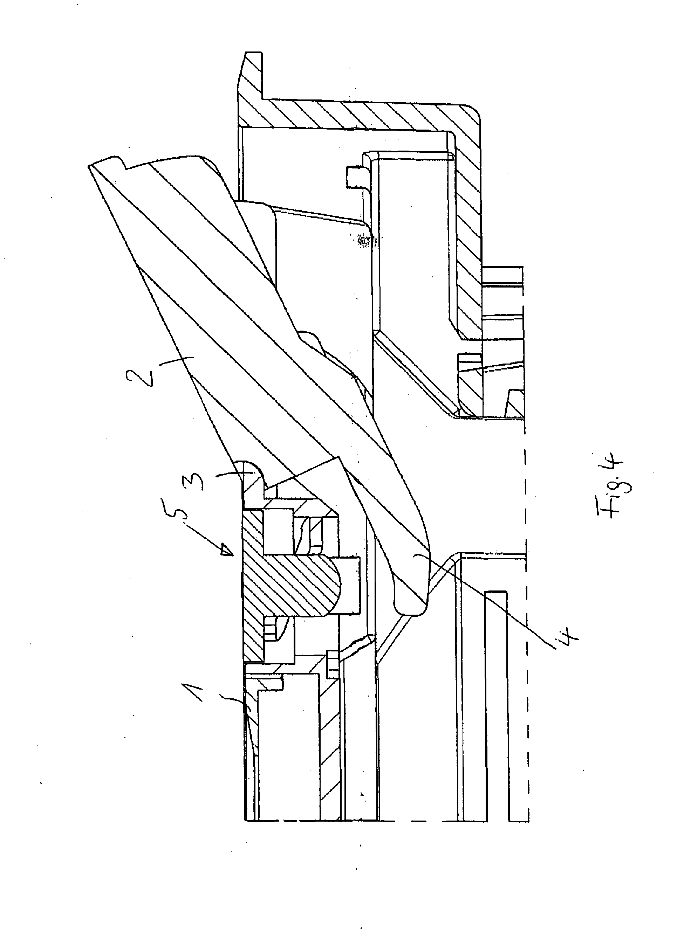

- Figur 4: desgleichen bei vollständig in die Öffnungslage verschwenkter Schließklappe;

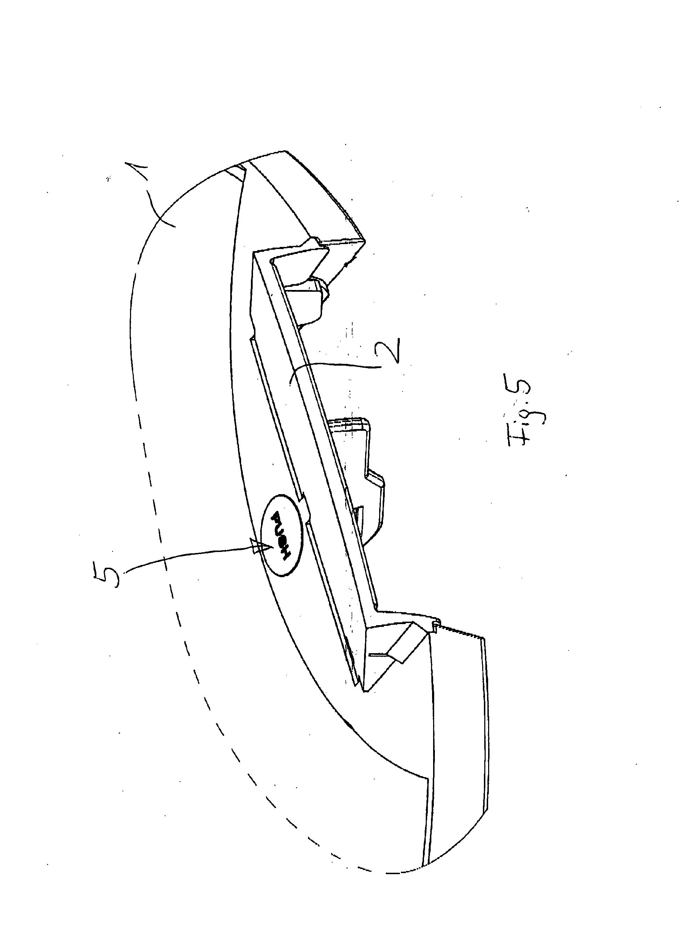

- Figur 5: eine Teilansicht auf die Randkante des Deckels bei geöffneter Schließklappe;

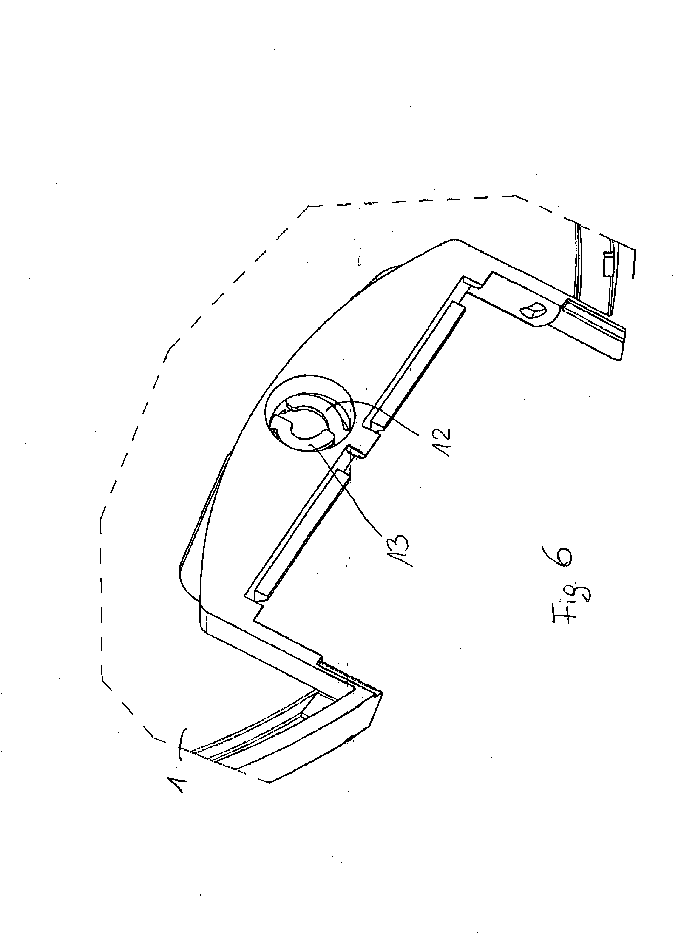

- Figur 6: einen Teilbereich des Deckels in Unteransicht.

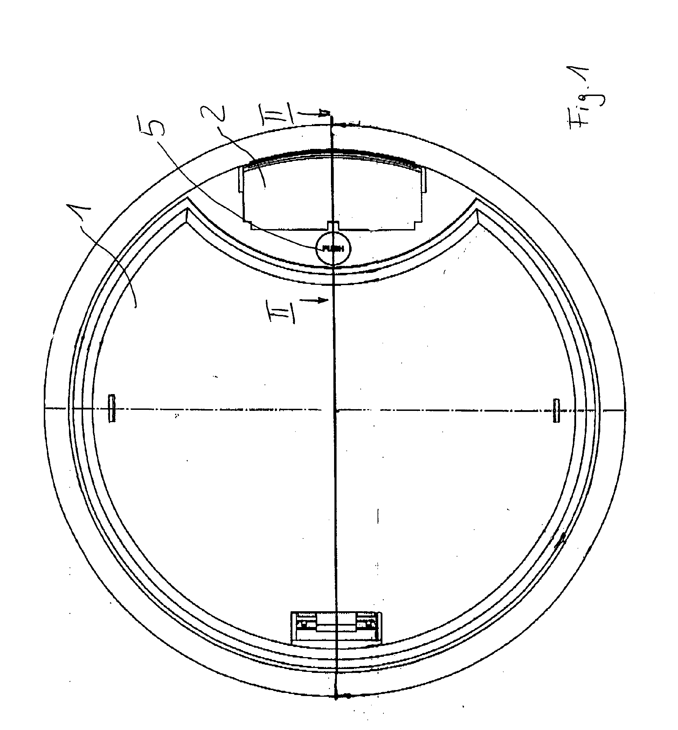

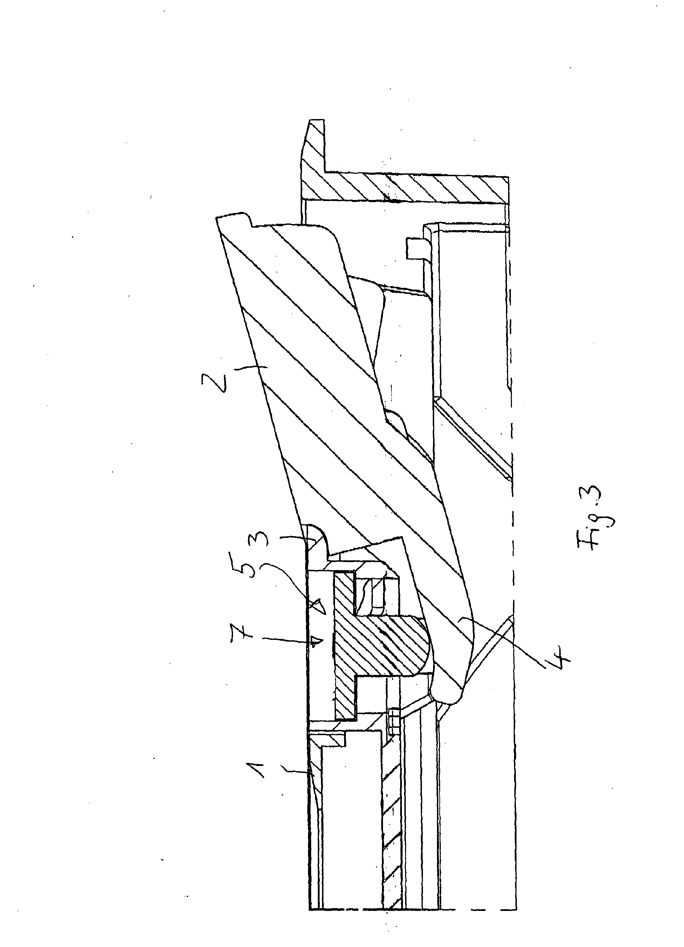

In Figur 1 ist der Deckel 1 einer Unterfluranschlussdose für elektrotechnische Zwecke gezeigt. Der Deckel weist einen Schnurauslass an einem Wandbereich auf, der durch eine Schließklappe 2 verdeckt ist, die bündig in den Deckel eingepasst ist. Die Schließklappe 2 ist um eine deckelseitige Schwenkachse 3 in eine Öffnungslage schwenkbar. Hierzu weist die Schließklappe 2 einen unterhalb der Oberseite des Deckels 1 liegenden Hebel 4 auf. Oberhalb des Hebels 4 ist ein den Deckel 1 durchgreifender Druckknopf 5 am Deckel 1 verschieblich gehaltert, der mit seinem Handhabungsendteil 6 bündig in der Oberfläche des Deckels 1 liegt und manuell zugreiflich und somit betätigbar ist. Mit seinem anderen Ende liegt der Druckknopf 5 oberhalb des Hebels 4, so dass durch Drücken auf das Handhabungsendteil 6 in Richtung des Pfeiles 7 der Hebel 4 nach unten gedrückt wird und somit die Schließklappe 2 in die Öffnungslage gemäß Figur 3 verschwenkt wird.

Der Druckknopf 5 weist als Handhabungsendteil 6 einen flachen Kopf auf, der bei nicht gedrücktem Druckknopf 5 bündig in der von der Deckeloberseite aufgespannten Ebene liegt. Als anderen Endteil weist der Druckknopf 5 einen schaftartigen Stößel 8 auf, mittels dessen der Hebel 4 betätigbar ist. Der Druckknopf 5 ist dabei in einer Führung 9 (Führungshülse) des Deckels 1 geführt und durch einen Anschlagkragen 10 in seiner Bewegung begrenzt in Richtung des Pfeiles 7 verschieblich. Der Druckknopf 5 ist gegen die Kraft einer Rückstellfeder 11 eindrückbar, wobei die Rückstellfeder 11 durch zwei Federarme 12,13 gebildet ist, die am Deckel 1 im Bereich der Einsatzöffnung für den Druckknopf 5 angeformt sind. Die Federarme 12,13 umgeben in der Einbausolllage nach Art einer Schraubendruckfeder den Schaft (8) des Druckknopfes 5 und liegen an der Unterseite des flachen Kopfes 6 an.

Der Hebel 4 liegt in der Schließlage an Anschlagflächen 14 an, die an der Unterseite des Deckels 1 ausgebildet sind. Die Schließklappe 2 kann in der Schließlage und/oder in der Öffnungslage rastend am Deckel 2 gehalten sein.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Unterfluranschlussdose für elektrotechnische Zwecke mit einem Deckel (1) und einem im Deckel (1) vorgesehenen Schnurauslass mit Schließklappe (2), wobei die Schließklappe (2) bündig in den Deckel (1) eingepasst und um eine deckelseitige Schwenkachse (3), in eine Öffnungslage schwenkbar ist, **dadurch gekennzeichnet, dass** die Schließklappe (2) einen unterhalb der Oberseite des Deckels (1) liegenden Hebel (4) aufweist und ein den Deckel (1) durchgreifender Druckknopf (5) am Deckel (1) verschieblich gehaltert ist, der mit seinem Handhabungsendteil (6) von der Oberseite des Deckels (1) betätigbar ist und mit seinem anderen Ende oberhalb des Hebels (4) liegt, so dass durch Drücken auf das Handhabungsendteil (6) der Hebel (4) und damit die Schließklappe (2) in Öffnungslage schwenkbar ist.

2. Unterfluranschlussdose nach Anspruch 1, **dadurch gekennzeichnet, dass** der Druckknopf (5) als Handhabungsendteil (6) einen flachen Kopf aufweist, der bei nicht gedrücktem Druckknopf (5) bündig in der von der Deckeloberseite aufgespannten Ebene liegt, und als anderen Enteil einen schaftartigen Stößel (8) aufweist, mittels dessen der Hebel (4) betätigbar ist.

3. Unterfluranschlussdose nach einem der Ansprüche 1 oder 2, **dadurch gekennzeichnet, dass** der Druckknopf (5) in einer Führung (9) des Deckels (1) geführt und durch einen Anschlagkragen (10) des Deckels (1) begrenzt in Richtung zum Boden oder Unterfluranschlussdose verschieblich ist.

4. Unterfluranschlussdose nach einem der Ansprüche 1 bis 3, **dadurch gekennzeichnet, dass** der Druckknopf (5) gegen die Kraft einer Rückstellfeder (11) eindrückbar ist.

5. Unterfluranschlussdose nach Anspruch 4, **dadurch gekennzeichnet, dass** die Rückstellfeder (11) durch Federarme (12,13) gebildet ist, die am Deckel (1) im Bereich der Einsatzöffnung für den Druckknopf (5) angeformt sind.

6. Unterfluranschlussdose nach Anspruch 5, **dadurch gekennzeichnet, dass** die Federarme (12,13) nach Art einer Schraubendruckfeder den Schaft (8) des Druckknopfes (5) umgeben und an der Unterseite des flachen Kopfes (6) mit ihrem freien Endbereich anliegen.

7. Unterfluranschlussdose nach einem der Ansprüche 1 bis 6, **dadurch gekennzeichnet, dass** der Hebel (4) in Schließlage der Schließklappe (2) an Anschlagflächen (14) anliegt, die an der Unterseite des Deckels (1) ausgebildet sind.

8. Unterfluranschlussdose nach einem der Anschlüsse 1 bis 7, **dadurch gekennzeichnet, dass** die Schließklappe (2) am Deckel (1) in Schließlage und/oder Öffnungslage rastend gehalten ist.
